# EUROPÄISCHE PATENTSCHRIFT

(11) **EP 2 603 410 B1**
(45) Veröffentlichungstag und Bekanntmachung des Hinweises auf die Patenterteilung: **06.05.2020**
(21) Anmeldenummer: 11727473.8
(22) Anmeldetag: 27.06.2011
(51) Int. Cl.: B60W 30/18

(54) **VERFAHREN ZUM BETREIBEN EINES BORDNETZES, STEUERUNG UND COMPUTERPROGRAMMPRODUKT**
METHOD FOR OPERATING A VEHICLE ELECTRICAL SYSTEM, CONTROLLER, AND COMPUTER PROGRAM PRODUCT
PROCÉDÉ PERMETTANT DE FAIRE FONCTIONNER UN RÉSEAU ÉLECTRIQUE DE BORD, COMMANDE ET PRODUIT-PROGRAMME INFORMATIQUE

(30) Priorität: 09.08.2010 DE 102010039041
(43) Veröffentlichungstag der Anmeldung: 19.06.2013
(73) Patentinhaber: Robert Bosch GmbH, 70442 Stuttgart (DE)
(72) Erfinder: SCHMIDT, Matthias, 70197 Stuttgart (DE)
(86) Internationale Anmeldenummer: PCT/EP2011/060709
(87) Internationale Veröffentlichungsnummer: WO 2012/019820

(56) Entgegenhaltungen:
- EP-A1- 1 420 497
- EP-A2- 1 619 067
- DE-A1- 3 525 107
- DE-A1-102006 008 642
- DE-A1-102008 057 604
- US-A1- 2009 192 020

## Beschreibung

### Stand der Technik

Die Erfindung bezieht sich auf ein Verfahren zum Betreiben eines Bordnetzes von einem Kraftfahrzeug mit mindestens einem Energiespeicher, wobei das Kraftfahrzeug eine Brennkraftmaschine und eine mit dieser mechanisch gekoppelte elektrische Maschine, ein betätigbares Fahrpedal für die Vorgabe eines Drehmoments, das mindestens von einer Brennkraftmaschine abgebbar ist und eine Motorsteuerung für eine Einspritzung von Kraftstoff in die Brennkraftmaschine sowie insbesondere ein betätigbares Bremspedal aufweist, durch das zumindest in einem ersten Teilbereich seiner Betätigung eine Steuerung unter der Vorraussetzung von ersten externen Betriebsbedingungen aktiviert wird, so dass eine Rekuperationsleistung zwischen der Maschine unter gleichzeitiger Energieeinspeisung in das Bordnetz erzeugt wird. Die Erfindung bezieht sich auch auf eine Steuerung für ein oben beschriebenes Bordnetz von einem Kraftfahrzeug. Die Erfindung bezieht sich ferner auf ein Computerprogrammprodukt.

Es ist zunehmend bekannt in Kraftfahrzeugen die Bremsenergie zu nutzen, indem ein Generatormoment einer elektrischen Maschine eingesetzt, variiert oder erhöht wird.

Die DE 10 2004 051530 A1 beschreibt ein Kraftfahrzeug, mit einem Generator und einem Kondensator. In einer Schubphase des Kraftfahrzeugs wird Rekuperationsenergie vom Generator als Rekuperator erzeugt und im Kondensator gespeichert. Um eine als unangenehm empfundene zu starke Verzögerung des Fahrzeugs im Rekuperationsbetrieb zu vermeiden, wird die Leistung des Generators durch einen Erregerstrom im Erregerkreis des Generators in Abhängigkeit von wenigstens einem fahrzeugspezifischen Betriebsparameter und/ oder dem momentanen Ladezustand des Kondensators variiert.

Die DE 10 2007 036 402 A1 beschreibt ein Verfahren zum Betrieb einer Elektromaschine in einem Fahrzeug, wobei die Elektromaschine abhängig von fahrzustandsbezogenen berechneten Messgrößen abhängig von einem fahrdynamischen Grenzbereich, wenn sich das Fahrzeug in einem solchen befindet, geregelt wird, um ein Moment der als Generator wirkenden Elektromaschine zur Stabilisierung des Fahrzeugs zu vermindern oder zu erhöhen.

Die DE 10 2008 061 821 A1 beschreibt ein Verfahren zur Rekuperation von Energie in einem Kraftfahrzeug während eines rekuperationsfähigen Betriebszustands, in dem freie Energie in elektrische Energie umgewandelt wird und im Bordnetz gespeichert oder direkt einem Fahrzeugaggregat zur Verfügung gestellt wird, wobei sich das Fahrzeug während einer Schubbetriebsphase und/ oder Bremsbetriebsphase im rekuperationsfähigen Betriebszustand befindet. Um eine wesentlich größere Menge an Energie zurückzugewinnen, wird bei einem erkannten fahrerseitigen oder systemseitigen Verzögerungswunsch ohne Betätigung des Bremspedals oder aktiven Bremseingriff eine Rekuperation von Energie mit einer gegenüber der Rekuperationsleistung bei Schubbetrieb größere Rekuperationsleistung vorgenommen.

Aus der DE 10 2008 057 604 A1 ist ein System zur Steuerung eines regenerativen Antriebs bekannt.

Aus der DE 10 2006 008 642 A1 ist ein Verfahren zum Betreiben eines Fahrzeugs mit einem Hybridantrieb bekannt.

Es ist Aufgabe der Erfindung ein Verfahren, eine Steuerung und ein Computerprogrammprodukt der eingangs genannten Art derart weiterzubilden, dass das Rekuperationspotential erhöht wird, wobei der Kraftstoffverbrauch der Brennkraftmaschine nicht erhöht wird.

### Offenbarung der Erfindung.

Erfindungsgemäß wird die Aufgabe durch den Gegenstand der Patentansprüche 1, 8 und 9 gelöst. Die abhängigen Ansprüche definieren bevorzugte Weiterbildungen der Erfindung.

Es ist ein Gedanke der Erfindung, einen möglichst hohen Anteil von Bremsenergie in eine Rekuperationsleistung umzuwandeln, um somit das Rekuperationspotential zu erhöhen. Bisher ist es herkömmlich bei einem einfachen Rekuperationssystem mit einem rekuperativen Generatormanagement auf Basis eines 14-V-Bordnetzes mit einer Blei-Säurebatterie als Energiespeicher bekannt, bei aktivierter Schubabschaltung die Generatorspannung und damit die Batterieladeleistung zu erhöhen. Somit wird ein Teil der Bremsenergie beim "Segeln", das heißt beim Schubbetrieb und Bremsen vom Fahrzeug zurückgewonnen. Gemäß leistungsfähigeren Rekuperationssystemen mit einer Lilon-Batterie oder einem Doppelschichtkondensator sind deutlich höhere Rekuperationsleistungen möglich. Hierbei wird vorzugsweise die Rekuperationsleistung durch das Bremspedal gesteuert. Auch bei diesen Systemen, die in Abhängigkeit vom Fahrpedal eine Rekuperation aktivieren, wird die Bedingung der, Schubabschaltung genutzt. Ein Gedanke der Erfindung ist, die Rekuperationsleistung in Betriebsphasen einzuführen und zu erhöhen, in denen die Schubabschaltung aufgrund von zweiten internen Betriebsbedingungen, sogenannten Sperrbedingungen verhindert oder verzögert wird.

Die Aufgabe wird also dadurch gelöst, dass auf eine Rekuperationsleistung der elektrischen Maschine von der Steuerung in eine Betriebsphase umgestellt wird, in der aufgrund von Betätigungen des Fahrpedals auf einen Fahrerwunsch zurückgeschlossen wird, der eine Bremsleistung des Fahrzeugs zur Folge hat, wobei die Einspritzung der Brennkraftmaschine aufgrund von zweiten internen Betriebsbedingungen des Fahrzeugs aufrecht erhalten wird. Somit kann deutlich früher als bisher im Stand der Technik bekannt rekuperiert werden.

Gemäß einer bevorzugten Ausführungsform wird aufgrund einer Rücknahme einer Betätigung des Fahrpedals als erste interne Betriebsbedingung rekuperiert. Somit wird jede Rücknahme der Betätigung des Fahrpedals als Verzögerungswunsch des Fahrers für das Fahrzeug abgeleitet.

Gemäß einer bevorzugten Ausführungsform, die kostengünstig herzustellen ist, wird abhängig von einer bestimmten Stellung, insbesondere einer betätigungsfreien "Null"-Stellung, des Fahrpedals als weitere erste externe Betriebsbedingung rekuperiert. Somit wird die Rekuperation abhängig von der Stellung des Fahrpedals gemacht. Eine bestimmte Stellung des Fahrpedals ist einfach mit kostengünstigen Stellungssensoren zu detektieren, und somit ist eine Steuerung der elektrischen Maschine zum Betreiben des Bordnetzes einfach realisierbar.

Gemäß einer weiter bevorzugten Ausführungsform wird alternativ oder zusätzlich abhängig von einer Dynamik der Rücknahme der Betätigung des Fahrpedals rekuperiert. Somit ist nicht nur die Stellung des Fahrpedals relevant sondern auch zusätzlich die Dynamik der Rücknahme. Hierfür ist eine entsprechende Sensorik mit einer entsprechenden Auswertevorrichtung vorgesehen.

Gemäß einer weiter bevorzugten Ausführungsform wird eine Intensität der Rekuperation von der Dynamik der Rücknahme des Fahrpedals abhängig gemacht. Somit wird eine stärkere Bremsleistung erzielt, wenn das Fahrpedal schneller zurückgenommen wird.

Erfindungsgemäss wird von der Steuerung das Generatormoment und somit die Rekuperationsleistung bis zu einer Betriebsgrenze erhöht, wobei interne zweite Betriebsbedingungen, wie insbesondere einen Katalysator aufheizen und/oder ein Warmlauf der Brennkraftmaschine sicher beibehalten werden, und die erhöhte Betriebsgrenze zu keinem Betriebspunktzeitpunkt zu einer Erhöhung der Einspritzmenge aufgrund einer Rekuperation führt. Somit wird ein maximales Rekuperationspotential ausgenutzt, wobei eine Erhöhung der Einspritzmenge nicht vorgesehen ist bzw. ein höheres Generatormoment nicht durch eine Erhöhung der Einspritzmenge für die Brennkraftmaschine kompensiert wird. Es wird jede elektrische Bremsleistung im Gegensatz zum Stand der Technik nicht nur bei aktivierter Schubabschaltung genutzt. Der Übergang zur Schubabschaltung kann während der Rekuperation fließend sein und vorzugsweise für den Fahrer nicht spürbar und gemäß dem Stand der Technik erfolgen.

Gemäß einer weiter bevorzugten Ausführungsform wird bei Detektion eines Schubbetriebs rekuperiert, insbesondere erhöht rekuperiert. Ein Schubbetrieb wird detektiert, wenn beispielsweise der Motor geschleppt wird, das heißt die kinetische Energie größer als die Antriebsenergie ist. Erhöht kann beispielsweise dadurch rekuperiert werden, in dem die Erregerspannung der elektrischen Maschine höher gesetzt wird.

Die Aufgabe wird auch durch eine Steuerung für ein Bordnetz von einem Kraftfahrzeug mit mindestens einem Energiespeicher dadurch gelöst, dass eine Steuerung vorgesehen ist, die mit der Motorsteuerung für die Brennkraftmaschine zusammenwirkt und insbesondere Mikrocomputer basierte Komponenten umfasst, um oben beschriebenes Verfahren auszuführen. Die Steuerung umfasst somit eine Auswertevorrichtung, die Sensorwerte des Fahrpedals, aufgrund einer Fahrpedalstellung oder einer Fahrpedaldynamik bzw. Intensität misst und auswertet und daraus einen Fahrerwunsch auswertet, der eine Bremsleistung des Fahrzeugs zur Folge hat. Erfindungsgemäß wird rekuperiert, obwohl aufgrund äußerer Randbedingungen z.B. Katalysator aufheizen oder einen kalten Motor warmlaufen zu lassen, in die Brennkraftmaschine Kraftstoff eingespritzt wird. Durch die erfindungsgemäße Steuerung kann somit das Rekuperationspotential erhöht werden. Es ist erfindungsgemäß gerade nicht wichtig, bis zur Schubabschaltung zu warten, um eine Rekuperation zu aktivieren.

Die Aufgabe wird auch durch ein Computerprogrammprodukt gelöst, das in einen Programmspeicher mit vorgesehenen Bereichen zur Aufnahme von Programmbefehlen eines Mikrocomputers in eine Steuerung ladbar ist, um oben beschriebene Schritte des Verfahrens auszuführen, wobei insbesondere die Steuerung mikrocomputerbasierte Komponenten aufweist. Ein Computerprogrammprodukt hat den Vorteil, dass es individuell an Fahrzeugtypen und Motortypen anpassbar ist und aufgrund von empirisch ermittelten Werten oder aus Testreihen ermittelte Werte individuell auch während des Betriebes des Fahrzeugs nachträglich anpassbar und optimierbar ist.

Es versteht sich, dass die vorstehend genannten und nachstehend genannten noch zu erläuternden Merkmale nicht nur in der jeweils angegebenen Kombination, sondern auch in anderen Kombinationen verwendbar sind.

### Kurze Beschreibung der Zeichnungen

Die Erfindung wird im Folgenden unter Bezugnahme auf die Zeichnungen näher erläutert. Es zeigen:
- Fig. 1: einen schematischen Schaltplan eines Bordnetzes mit Antriebseinheit und eingebetteter erfindungsgemäßer Steuerung und
- Fig. 2: ein Flussdiagramm eines erfindungsgemäßen Verfahrensablaufes der erfindungsgemäßen Steuerung.

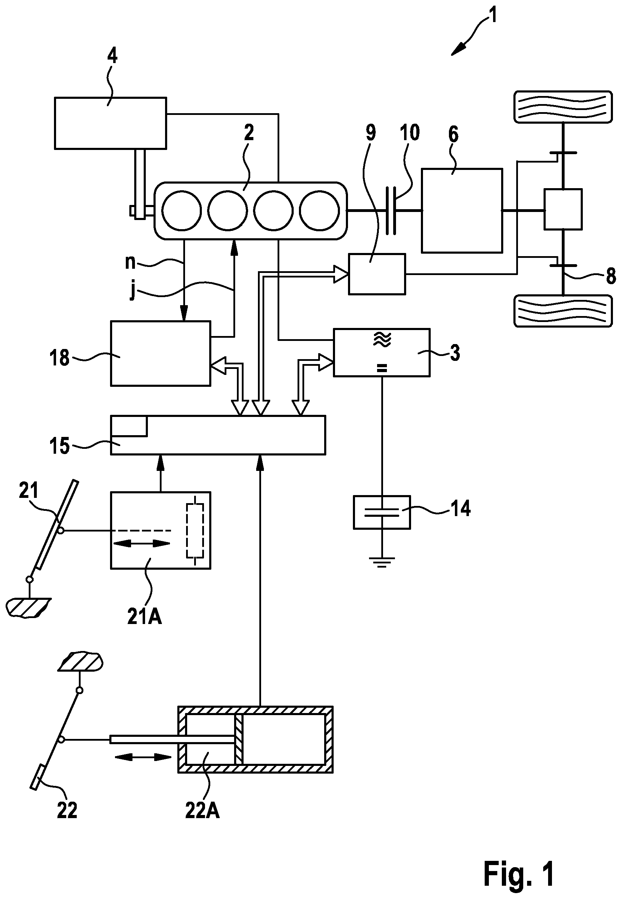

Die Fig. 1 zeigt einen schematischen Schaltplan eines Bordnetzes von einem Kraftfahrzeug 1. Das Kraftfahrzeug 1 umfasst eine Brennkraftmaschine 2, die mechanisch mit einer elektrischen Maschine 4 gekoppelt ist. Die elektrische Maschine 4 ist vorzugsweise eine Klauenpolmaschine. Die Brennkraftmaschine 2 ist beispielsweise über einen Riemen mit der elektrischen Maschine 4 gekoppelt. Zwischen dem Generator und einem elektrischen Energiespeicher 14 ist eine Leistungselektronik 3 geschaltet. Die Leistungselektronik 3 umfasst einen Gleichrichter sowie einen Regler, insbesondere einen Generatorregler zur Regelung der Erregerspannung und/ oder des Speisestroms bzw. Speisespannung in den elektrischen Energiespeicher 14. Die Leistungselektronik 3 wird von einer Steuerung 15 angesteuert und ist somit ein Teil der erfindungsgemäßen Steuerung.

Die Brennkraftmaschine 2 treibt über eine Kupplung 10 und ein Getriebe 6 Antriebsräder 7 und 8 an. Die Antriebsräder 7, 8 sind mittels eines mechanischen Bremssystems 9 bremsbar. Das Getriebe kann ein automatisches oder ein manuell betätigbares Getriebe sein.

Das Kraftfahrzeug 1 umfasst ferner ein betätigbares Fahrpedal 21 mit einem Fahrpedalsensor 21A und ein Bremspedal 22 mit einem Bremspedalsensor 22A. Die Sensoren 21A und 22A vom Fahrpedal 21 und Bremspedal 22 sind mit der Steuerung 15 verbunden. Die Steuerung 15 gibt Steuerinformationen der durch die Sensoren 21A, 22A ausgewerteten Stellungen vom Fahrpedal 21 und vom Bremspedal 22 entsprechend an die Motorsteuerung 18, an die Leistungselektronik 3 des Generators und an die mechanische Bremssteuerung 9 weiter. Die Motorsteuerung 18 steuert und regelt die Brennkraftmaschine 2 entsprechend von internen Betriebsbedingungen und externen Betriebsbedingungen, wie beispielsweise Fahrerwünsche, die aufgrund des Fahrpedals 21 bzw. Bremspedals 22 ausgewertet werden.

Die Motorsteuerung 18 kann mit der Steuerung 15 als eine bauliche Einheit realisiert sein, oder wie in der Fig. 1 gezeigt, zwei Baueinheiten umfassen.

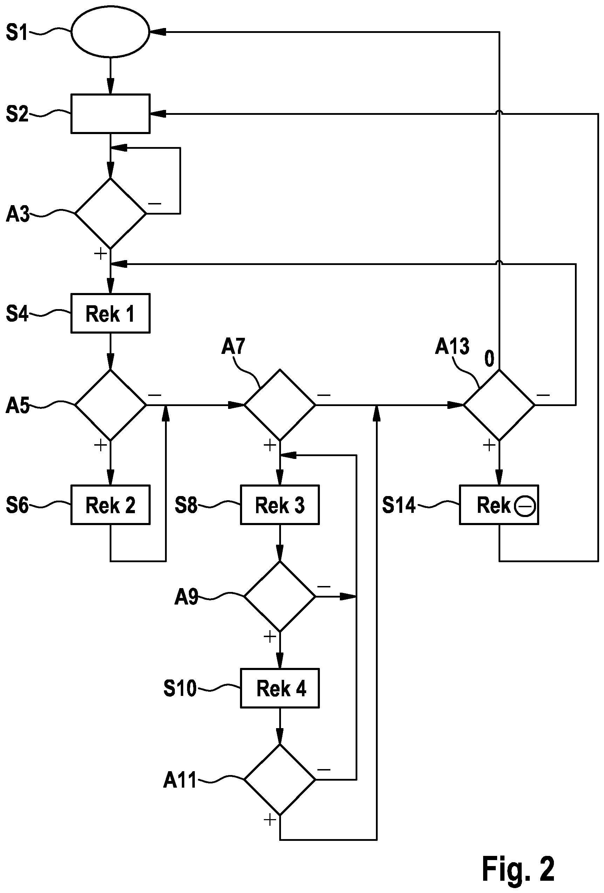

Die Fig. 2 zeigt ein schematisches Ablaufdiagramm, wie es in der Steuerung 15 vorzugsweise ablaufen kann. Zu einem Zeitpunkt, wenn die Brennkraftmaschine 2 mittels eines nicht dargestellten Starters gestartet worden ist, beginnt die Steuerung mit Schritt S1 zu arbeiten.

In einem Schritt S2 wird das Fahrzeug 1 in Bewegung gesetzt, indem das Fahrpedal 21, von dem Sensor 21A detektiert, betätigt wird.

Die Steuerung 15 geht dann in den Abfrageschritt A3 über und fragt mittels des Fahrpedalsensors 21A laufend ab, ob das Fahrpedal 21 zurückgenommen wird oder nicht. Eine Rücknahme des Fahrpedals kann einmal eine Fahrpedalstellung, insbesondere eine betätigungsfreie "Null"-Stellung, das heißt eine nicht betätigte Stellung oder jede andere kleinere Stellung als die im Schritt 2 betätigte Stellung umfassen. Ferner kann auch die Dynamik der Rücknahme des Fahrpedals 21 gemäß einer bevorzugten Ausführungsform von dem Sensor 21 A mit einer Auswerteelektronik erfasst werden. Wird eine Rücknahme nicht detektiert, so wird der Abfrageschritt A3 laufend wiederholt.

Wird der Abfrageschritt A3 bejaht, so schaltet die Steuerung 15 die Leistungselektronik 3 auf Rekuperieren um, so dass die elektrische Maschine 2 als Generator elektrische Energie gemäß eines ersten Rekuperationsmodus Rek1 rekuperiert. Hierbei wird in die Brennkraftmaschine 2, gesteuert von der Motorsteuerung 18, immer noch Kraftstoff eingespritzt, beispielsweise um einen Katalysator auf eine Betriebstemperatur aufzuheizen oder die Brennkraftmaschine 2 auf eine warme Betriebstemperatur zu bringen, um die Brennkraftmaschine in ein Betriebsumfeld mit einem niedrigem Kraftstoffverbrauch zu bringen. Die Rekuperation im Rekuperationsmodus Rek1 erfolgt somit im Schritt S4.

Das Verfahren geht in eine neue Abfrage zum nächsten Abfrageschritt A5, in dem abgefragt wird, ob Vorraussetzungen für eine Schubabschaltung vorliegen. Das heißt hier wird geprüft, ob ein Schubbetrieb vorliegt und eine Schubabschaltung ausgeführt wird. Die Schubabschaltung wird beispielsweise nach einem gewissen Zeitablauf ausgelöst, wenn aufgrund von internen Betriebsbedingungen eine Schubabschaltung möglich ist, beispielsweise weil ein Katalyator aufgeheizt oder ein Warmlauf der Brennkraftmaschine nicht mehr nötig ist.

Wird eine Schubabschaltung bejaht, so wird in einem zweiten Rekuperationsmodus Rek2 in Schritt S6 rekuperiert. Dieser Schritt ist bereits in herkömmlichen Fahrzeugen realisiert und bekannt. Der Rekuperationsgewinn ergibt sich somit insbesondere durch Einführung des Rekuperationsmodus Rek1.

Wird die Schubabschaltung verneint oder bejaht erfolgt unabhängig davon eine weitere Abfrage in Schritt A7 durch Abfrage des Bremspedalssensors 22A, ob das Bremspedal 22 betätigt wird.

Wird dies bejaht, so wird in einem Schritt S8 ein dritter Rekuperationsmodus Rek3 gestartet, in dem abhängig von der Intensität und Stärke der Betätigung des Bremspedals 22 das Rekuperationsmoment über die Leistungselektronik 3 noch höher gesetzt wird oder variiert wird und gegebenenfalls das mechanische Bremssystem über die mechanische Bremssteuerung 3 aktiviert wird, um das Fahrzeug abzubremsen.

Die Steuerung 15 geht dann anschließend in einen Abfrageschritt A9 über, um abzufragen, ob die Brennkraftmaschine in einem weiteren Schubbetrieb mitgeschleppt wird, so dass in einem Schritt S10 mit einem Rekuperationsmodus Rek4 die Rekuperation gegenüber dem Schritt S8 noch weiter erhöht werden kann.

Die Abfragen wiederholen sich, bis in einem Schritt A11 abgefragt wird, ob das Bremspedal 22 auf eine betätigungsfreie Stellung zurückgenommen wurde.

Wenn die Betätigung des Bremspedals 22 noch nicht zurückgenommen wurde, wird weiter rekuperiert mit oder ohne Schubbetrieb in einem Rekuperationsmodus 3 oder 4.

Ist das Bremspedal betätigungsfrei in einer "Null"-Stellung, so wird in einem Abfrageschritt A13 geprüft, ob das Fahrpedal 21 wieder betätigt worden ist.

Wird dies bejaht, so wird in einem Schritt S14 der entsprechend eingestellte Rekuperationsmodus ausgeschaltet und die Steuerung geht zum Schritt S2 wieder über.

Wird das Fahrpedal nicht betätigt und rollt das Fahrzeug weiter, so wird auf den Rekuperationsmodus Rek1 umgeschaltet.

Wird das Fahrpedal nicht betätigt so und liegt ein Stillstand des Fahrzeugs vor, so wird die Steuerung in Schritt S1 geleitet. Aufgrund der hier vorgeschlagenen Energiemanagementstrategie kann somit eine sofortige Freigabe der Rekuperation in einem Rekuperationsmodus Rek1 erfolgen, sobald dies möglich ist. Das Rekuperationspotential ist somit erhöht. Diese Rekuperationsfunktion ist auf alle Fahrzeuge in allen Hybrid-Variationen und Stufen, wie Mild-, Mikro oder Voll-Hybrid, einsetzbar. Es kann somit elektrische Energie durch eine Erhöhung eines Generatormoments ohne eine Erhöhung der Einspritzmenge gewonnen werden. Die kinetische Energie zur Fahrzeugverzögerung oder auch die potentielle Energie aus einer Bergabfahrt kann somit gewonnen werden. Auf eine Schubabschaltung muss nicht mehr gewartet werden, um zu rekuperieren. Alle Figuren zeigen lediglich schematische nicht maßstabsgerechte Darstellungen.

## Patentansprüche

1. Verfahren zum Betreiben eines Bordnetzes von einem Kraftfahrzeug mit mindestens einem Energiespeicher (14), wobei das Kraftfahrzeug eine Brennkraftmaschine (2) und eine mit dieser mechanisch gekoppelte elektrische Maschine (4), ein betätigbares Fahrpedal (21) für die Vorgabe eines Drehmomentes, das mindestens von der Brennkraftmaschine (2) abgebbar ist, eine Motorsteuerung (18) für eine Einspritzung (J) von Kraftstoff in die Brennkraftmaschine (2), sowie ein betätigbares Bremspedal (22) aufweist, durch das zumindest in einem ersten Teilbereich seiner Betätigung eine Steuerung (15) unter der Voraussetzung von ersten externen Betriebsbedingungen aktiviert wird, so dass eine Rekuperationsleistung der elektrischen Maschine unter gleichzeitiger Energieeinspeisung in das Bordnetz erzeugt wird, **dadurch gekennzeichnet, dass** auf eine Rekuperationsleistung der elektrischen Maschine (4) von der Steuerung (15) umgestellt wird, wenn aufgrund von Betätigungen des Fahrpedals (21) auf einen Fahrerwunsch zurückgeschlossen wird, der eine Bremsleistung des Fahrzeugs zur Folge hat, und die Einspritzung (J) der Brennkraftmaschine (2) aufgrund von zweiten internen Betriebsbedingungen des Fahrzeugs aufrecht erhalten wird,
wobei von der Steuerung (15) das Generatormoment und somit die Rekuperationsleistung bis zu einer Betriebsgrenze erhöht wird, wobei die internen zweiten Betriebsbedingungen sicher beibehalten werden, und die erhöhte Rekuperationsleistung zu keinem Betriebszeitpunkt zu einer Erhöhung der Einspritzmenge aufgrund der Rekuperation führt.

2. Verfahren nach Anspruch 1, **dadurch gekennzeichnet, dass** aufgrund einer Rücknahme einer Betätigung des Fahrpedals (21) als weitere erste externe Betriebsbedingung rekuperiert wird.

3. Verfahren nach Anspruch 1 oder 2, **dadurch gekennzeichnet, dass** abhängig von einer bestimmten Stellung, insbesondere einer betätigungsfreien "Null"-Stellung, des Bremspedals (22) als erste externe Betriebsbedingung rekuperiert wird.

4. Verfahren nach Anspruch 1, 2 oder 3, **dadurch gekennzeichnet, dass** abhängig von deiner Dynamik der Rücknahme der Betätigung des Fahrpedals rekuperiert wird.

5. Verfahren nach einem der Ansprüche 1 bis 4, **dadurch gekennzeichnet, dass** eine Intensität der Rekuperation von der Dynamik der Rücknahme des Fahrpedals abhängig gemacht wird.

6. Verfahren nach einem der Ansprüche 1 bis 5, **dadurch gekennzeichnet, dass** die internen zweiten Betriebsbedingungen, durch ein Katalysatoraufheizen und/oder einen Warmlauf der Brennkraftmaschine gegeben sind.

7. Verfahren nach einem der Ansprüche 1 bis 6, **dadurch gekennzeichnet, dass** bei Detektion eines Schubbetriebs rekuperiert wird.

8. Steuerung für ein Bordnetz von einem Kraftfahrzeug mit mindestens einem Energiespeicher (14), wobei das Kraftfahrzeug eine Brennkraftmaschine (2) und eine mit dieser mechanisch gekoppelte elektrische Maschine (4), mit einem betätigbaren Fahrpedal (21) für die Vorgabe eines Drehmomentes, das mindestens von der Brennkraftmaschine (2) abgebbar ist, sowie eine Motorsteuerung (18) für die Einspritzung (J) von Kraftstoff in die Brennkraftmaschine (2), sowie insbesondere ein betätigbares Bremspedal (22) aufweist, durch das in einem ersten Teilbereich seiner Betätigung eine Steuerung unter Voraussetzung von ersten externen Betriebsbedingungen aktiviert wird, so dass eine Rekuperationsleistung der elektrischen Maschine unter gleichzeitiger Energieeinspeisung in das Bordnetz erzeugbar ist, **dadurch gekennzeichnet, dass** eine Steuerung (15) vorgesehen ist, die mit der Motorsteuerung (18) für die Brennkraftmaschine (2) zusammenwirkt und Komponenten, insbesondere Mikrocomputer-basierte Komponenten, zur Ausführung des Verfahrens nach mindestens einem der Ansprüche 1 bis 7 mit umfasst.

9. Computerprogrammprodukt, das in einen Programmspeicher mit vorgesehenen Bereichen zur Aufnahme von Programmbefehlen eines Mikrocomputers in eine Steuerung ladbar ist, um alle Schritte des Verfahrens nach wenigstens einem der Ansprüche 1 bis 7 auszuführen, wobei insbesondere die Steuerung (15) nach Anspruch 8 die Mikrocomputer-basierten Komponenten aufweist.

## Claims

1. Method for operating an on-board electrical system of a motor vehicle having at least one energy store (14), wherein the motor vehicle has an internal combustion engine (2) and an electric machine (4) mechanically coupled thereto, has an actuatable accelerator pedal (21) for the presetting of a torque that can be output at least by the internal combustion engine (2), has an engine controller (18) for an injection (J) of fuel into the internal combustion engine (2), and has an actuatable brake pedal (22) by means of which, at least in a first sub-range of its actuation, a controller (15) is activated provided that first external operating conditions are present, such that a recuperation power of the electric machine is generated with a simultaneous infeed of energy into the on-board electrical system, **characterized in that** a switchover to a recuperation power of the electric machine (4) is performed by the controller (15) if, on the basis of actuations of the accelerator pedal (21), a driver demand which results in a braking power of the vehicle is inferred, and the injection (J) of the internal combustion engine (2) is maintained on the basis of second internal operating conditions of the vehicle,
wherein the generator torque and thus the recuperation power is increased by the controller (15) up to an operating limit, wherein the internal second operating conditions are reliably maintained, and the increased recuperation power does not lead, at any time during operation, to an increase of the injection quantity on the basis of the recuperation.

2. Method according to Claim 1, **characterized in that**, recuperation is performed on the basis of a withdrawal of an actuation of the accelerator pedal (21) as a further first external operating condition.

3. Method according to Claim 1 or 2, **characterized in that** recuperation is performed in a manner dependent on a particular position, in particular an actuation-free "zero" position, of the brake pedal (22) as a first external operating condition.

4. Method according to Claim 1, 2 or 3, **characterized in that** recuperation is performed in a manner dependent on dynamics of the withdrawal of the actuation of the accelerator pedal.

5. Method according to any of Claims 1 to 4, **characterized in that** an intensity of the recuperation is made dependent on the dynamics of the withdrawal of the accelerator pedal.

6. Method according to any of Claims 1 to 5, **characterized in that** the internal second operating conditions are defined by catalytic converter heating and/or a warm-up of the internal combustion engine.

7. Method according to any of Claims 1 to 6, **characterized in that** recuperation is performed upon detection of overrun operation.

8. Controller for an on-board electrical system of a motor vehicle having at least one energy store (14), wherein the motor vehicle has an internal combustion engine (2) and an electric machine (4) mechanically coupled thereto, has an actuatable accelerator pedal (21) for the presetting of a torque that can be output at least by the internal combustion engine (2), has an engine controller (18) for the injection (J) of fuel into the internal combustion engine (2), and in particular has an actuatable brake pedal (22) by means of which, in a first sub-range of its actuation, a controller is activated provided that first external operating conditions are present, such that a recuperation power of the electric machine is generated with a simultaneous infeed of energy into the on-board electrical system, **characterized in that** a controller (15) is provided which interacts with the engine controller (18) of the internal combustion engine (2) and which also comprises components, in particular microcomputer-based components, for carrying out the method according to at least one of Claims 1 to 7.

9. Computer program product which can be loaded into a program memory with provided fields for recording program commands of a microcomputer into a controller, in order to carry out all steps of the method according to at least one of Claims 1 to 7, wherein, in particular, the controller (15) according to Claim 8 has the microcomputer-based components.

## Revendications

1. Procédé pour faire fonctionner un réseau de bord d'un véhicule automobile comprenant au moins un accumulateur d'énergie (14), le véhicule automobile présentant un moteur à combustion interne (2) et une machine électrique (4) accouplée mécaniquement à celui-ci, une pédale d'accélération commandable (21) pour prédéfinir un couple pouvant être fourni au moins par le moteur à combustion interne (2), une commande de moteur (18) pour une injection (J) de carburant dans le moteur à combustion interne (2) ainsi qu'une pédale de frein commandable (22), par le biais de laquelle, au moins dans une première plage partielle de son actionnement, une commande (15) est activée en tenant compte de premières conditions de fonctionnement externes, de telle sorte qu'une puissance de récupération de la machine électrique avec une injection simultanée d'énergie dans le réseau de bord soit générée, **caractérisé en ce que** la commande (15) amorce une commutation à une puissance de récupération de la machine électrique (4) lorsque l'actionnement de la pédale d'accélération (21) permet de déduire un souhait du conducteur qui entraîne une puissance de freinage du véhicule, et l'injection (J) du moteur à combustion interne (2) est maintenue sur la base de deuxièmes conditions de fonctionnement internes du véhicule,
la commande (15) augmentant le couple générateur et par conséquent la puissance de récupération jusqu'à une limite de fonctionnement, les deuxièmes conditions de fonctionnement internes étant maintenues de manière sûre et la puissance de récupération accrue ne conduisant à aucun moment du fonctionnement à une augmentation de la quantité d'injection du fait de la récupération.

2. Procédé selon la revendication 1, **caractérisé en ce que** la récupération est amorcée sur la base d'un rappel de l'actionnement de la pédale d'accélération (21) en tant que première condition de fonctionnement externe supplémentaire.

3. Procédé selon la revendication 1 ou 2, **caractérisé en ce qu'**une récupération est amorcée en fonction d'une position déterminée, en particulier d'une position « zéro » sans actionnement, de la pédale de frein (22) en tant que première condition de fonctionnement externe.

4. Procédé selon la revendication 1, 2 ou 3, **caractérisé en ce qu'**une récupération est amorcée en fonction d'une dynamique de rappel de l'actionnement de la pédale d'accélération.

5. Procédé selon l'une quelconque des revendications 1 à 4, **caractérisé en ce qu'**une intensité de la récupération est rendue dépendante de la dynamique de rappel de la pédale d'accélération.

6. Procédé selon l'une quelconque des revendications 1 à 5, **caractérisé en ce que** les deuxièmes conditions de fonctionnement internes sont définies par un chauffage d'un catalyseur et/ou un fonctionnement à chaud du moteur à combustion interne.

7. Procédé selon l'une quelconque des revendications 1 à 6, **caractérisé en ce qu'**une récupération est amorcée à la détection d'un mode de fonctionnement en poussée.

8. Commande pour un réseau de bord d'un véhicule automobile comprenant au moins un accumulateur d'énergie (14), le véhicule automobile présentant un moteur à combustion interne (2) et une machine électrique (4) accouplée mécaniquement à celui-ci, avec une pédale d'accélération commandable (21) pour prédéfinir un couple pouvant être fourni au moins par le moteur à combustion interne (2), ainsi qu'une commande de moteur (18) pour une injection (J) de carburant dans le moteur à combustion interne (2) et ainsi que notamment une pédale de frein commandable (22), par le biais de laquelle, au moins dans une première plage partielle de son actionnement, une commande est activée en tenant compte de premières conditions de fonctionnement externes, de telle sorte qu'une puissance de récupération de la machine électrique avec une injection simultanée d'énergie dans le réseau de bord puisse être générée, **caractérisé en ce qu'**une commande (15) est prévue, laquelle coopère avec la commande de moteur (18) pour le moteur à combustion interne (2) et inclut des composants, en particulier des composants à base de micro-ordinateur, pour mettre en œuvre le procédé selon au moins l'une quelconque des revendications 1 à 7.

9. Produit de programme informatique qui peut être chargé dans une mémoire de programme avec des zones prévues pour recevoir des commandes de programme d'un micro-ordinateur dans une commande, afin de mettre en œuvre toutes les étapes du procédé selon au moins l'une quelconque des revendications 1 à 7, la commande (15) selon la revendication 8 présentant notamment les composants à base de micro-ordinateur.
